# EUROPEAN PATENT APPLICATION

(11) **EP 1 847 927 A1**
(43) Date of publication of application: **24.10.2007**
(21) Application number: 07251322.9
(22) Date of filing: 28.03.2007
(51) Int. Cl.: G06F 9/445

(54) **Systems and methods for distributing software to a host device in a cable system**

(30) Priority: 31.03.2006 US 278242
(71) Applicant: TANDBERG TELEVISION INC., Duluth, Georgia 30096 (US)
(72) Inventor: Lehrman, Ira, Littleton Colorado 80124 (US)
(74) Representative: Want, Clifford James

(57) **Abstract**

A system and method is disclosed for orderly distribution of software modules to various hosts in a cable system. A download manager ensures distribution of required and compatible software objects to various hosts in a cable system. The system abstracts various software dependencies and host-specific aspects from the network operator, allowing easy and efficient update of host software for a variety of host in an otherwise error prone process. The system allows a host to identify itself to the network for purposes of associating the host to a host profile, which ensures necessary and only compatible software modules are downloaded. The system also uses site profile data to determine appropriate software modules for distribution to the host.

## Description

The present invention is generally directed to the distribution of software to host devices, such as cable set top boxes and Integrated Digital Cable Ready TVs (IDCR TVs), in a cable network.

Cable television networks are established communication networks for the delivery of television programming. Frequently, a set-top-box (STB) is provided by the cable network operator to the customer to control the processing of signals from the cable network as well as process the signals in a manner that is compatible with the television receiver. For example, program signals may be transmitted in a compressed digital format and must be converted by the STB to a format compatible with a television that does not have digital inputs.

The STB is used to facilitate other services provided by cable networks, including Video-on-demand (VOD), premium channels, interactive television, along with interactive video games and data services. It is quite common for cable network providers to offer high-speed data (HSD) services using a DOCSIS-based modem for subscribers to browse the world-wide-web. Cable Network providers often use the same HSD infrastructure for providing voice services. The DOCSIS functionality may in integrated into the STB or may be embodied in a separate physical unit.

The operation of the above services is facilitated by using various types of devices, broadly termed 'host devices' or simply 'hosts', that are attached to the cable network, typically at the subscriber's premises. Thus, broadly interpreted, DOCSIS modems, digital televisions, IP-based telephones, and set top boxes are embodiments of hosts. Hosts may be owned by the cable service provider (and rented to the customer) or owned by the customer. Hosts may be standalone devices or can be integrated into other consumer electronics. For example, television manufacturers provide CableCARD® ready televisions that do not require a separate set-top box; in such cases the host is the television. Thus, various physical arrangements and configurations are possible. While various embodiments of hosts are possible, the principles of the present invention are disclosed in terms of a set-top-box, although other embodiments are possible and within the scope of the present invention.

One common function of the set-top-box (STB) is to ensure that only authorized users receive services, which is accomplished using various software routines resident in the host. While a host typically has software installed in it when the host is initially manufactured, it may be upgraded during the course of its deployment. If the upgrade results in software incompatibility within the host, then a result can be the complete or partial failure of the host and the customer is unable to receive the desired service, or the service may function improperly. An improperly configured set-top-box could result in a user being able to receive broadcast channels, but unable to select a movie-on-demand.

Cable providers have developed mechanisms for distributing software to hosts. One common reason for distributing software is to correct software defects in the software resident in the host or to augment the capabilities of the host or network. There are a large number of different host types, with different versions of software, and this complicates the distribution of software. While each host type typically requires different software modules, these modules often perform the same or similar functions. Further complicating the distribution of software is that for every type of host, there are typically several models of the host from a given manufacturer attached to the network. For example, a cable network may recognize multiple brands of cable modems or STBs, each with a unique software version for providing data or video services. Complicating the problem still further is that each manufacturer may have different software releases for each model.

In addition, each host device may require a specific combination of software modules for proper operation. Thus, a host may require multiple software modules with the requirement that specific combinations of certain versions are loaded and running into the host. The particular combination required may depend on the particular set of services subscribed to by a user or may be defined by the cable operator for other reasons.

As evident, the distribution of software to hosts is complicated and potentially error prone. Cable network providers can simplify this task by limiting the types of hosts that can be used to a single type and requiring all hosts to be upgraded at the same time, but this approach is unreasonable, impractical, and undesirable by cable service providers. This tends to limit the variety and flexibility of services offered. The fact that new types of host devices are continuously being manufactured and added to cable networks facilitates the adoption of new services by cable operators and increases revenue. As expected, errors can occur during software distribution adversely affecting customers by rendering their hosts inoperative for certain services, thereby causing customer service complaints. The difficulty lies not with the ability to transmit software updates to hosts, but with the management of the software distribution. The various combinations of software, hosts, and other limitations (as will be seen) complicate the distribution of software in a cable network. Therefore, systems and methods are required to facilitate the management of software distribution to hosts in a cable network.

According to a first aspect of the invention, there is provided a method for distributing a software module as claimed in claim 1.

According to a second aspect of the invention, there is provided a method of downloading software as claimed in claim 20.

According to a third aspect of the invention, there is provided a system for downloading a software object to a host on a cable network as claimed in claim 27.

Further embodiments of the invention are included in the dependent claims.

Having thus described the invention in general terms, reference will now be made to the accompanying drawings, which are not necessarily drawn to scale, and wherein:

Figure 1 illustrates one embodiment of distributing host software from a host manufacturer to an enhanced services server;

Figures 2a and 2b illustrate various embodiments of selecting a software module for a particular cable network;

Figure 3 illustrates one embodiment of the various states potentially associated with a software module;

Figure 4a illustrates one embodiment of various software modules resident in a host;

Figure 4b illustrates one embodiment of various restrictions associated with the operation of software modules;

Figure 4c illustrates one embodiment of steps associated with updating software modules in a host;

Figure 5 illustrates various embodiments of a host providing information for association with a host profile;

Figure 6 illustrates one embodiment of the elements involved in downloading software to a host; and

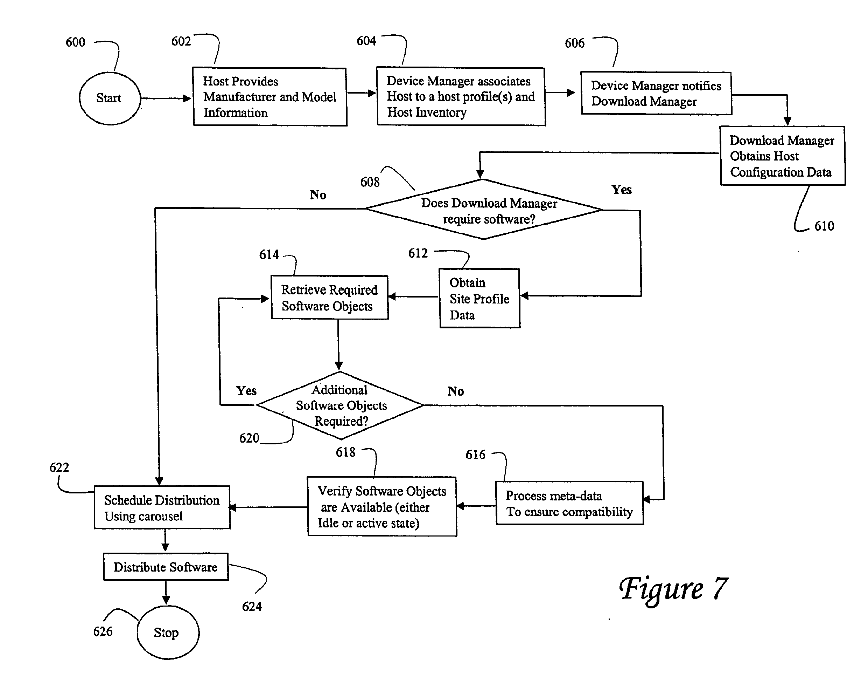

Figure 7 illustrates one embodiment of the steps involved in downloading software to a host.

The present inventions now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that the disclosure satisfies applicable legal requirements. Like numbers refer to like elements throughout. Although specific terms are employed herein, they are used in a generic and descriptive sense only and not for purposes of limitation.

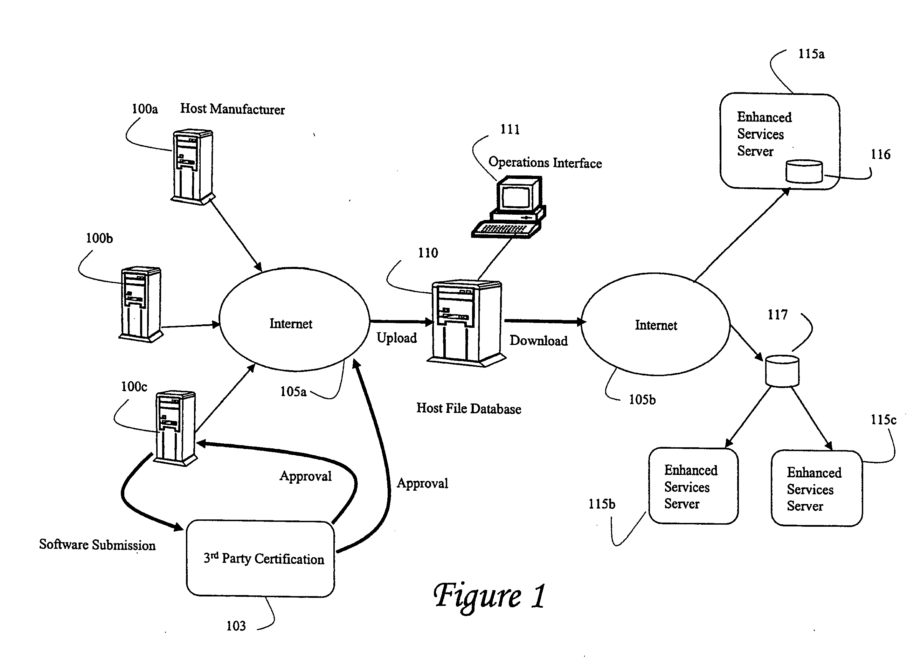

The present invention is based on, and adds to, the subject matter of U.S. Patent Application No. 10/712,890, filed on Nov. 12, 2003, entitled *Systems and Methods for Distributing Software For a Host Device In a Cable System.* The aforementioned patent application discloses distribution of software from the software producer to an enhanced services server in a cable network. For example, turning to Figure 1, various host software producers (which typically are the host manufacturers, but can be independent third party software providers) download host software from their computers 100a via the Internet 105a or any other communications network, to a central Host File Database 110 (HFD). The HFD 110 typically stores the files until the required software is downloaded again, using the Internet 105b, to various Enhanced Services Servers 115c (ESS), as disclosed in the aforementioned application, which can be associated with one or more cable networks. Further details and other embodiments can be found in the aforementioned application. Various schemes for transferring the software between the various entities can be defined based on a "push" or "pull" model (or combination thereof) for providing the software to the appropriate ESS 115. Other embodiments include mailing storage media (e.g., compact discs) with the software module from a host software provider to the cable system operator. In this case, the cable network operator manually loads the software in the ESS.

One aspect of the present invention that builds upon the aforementioned specification includes additional flexibility in storing and transmitting the software to the appropriate ESS. For example, in Figure 1, a local database 116 may be associated with the ESS. However, in other embodiments, a common local database 117 may exist that serves multiple ESS systems 115c, 115b. The common local database 117 may be operated by the same network operator that operates the ESS systems 115b, 115c, or may be operated by a third party as a service bureau. Further, as will be discussed, additional capabilities may be associated with the local database of software to aid in the further selective downloading of appropriate software objects.

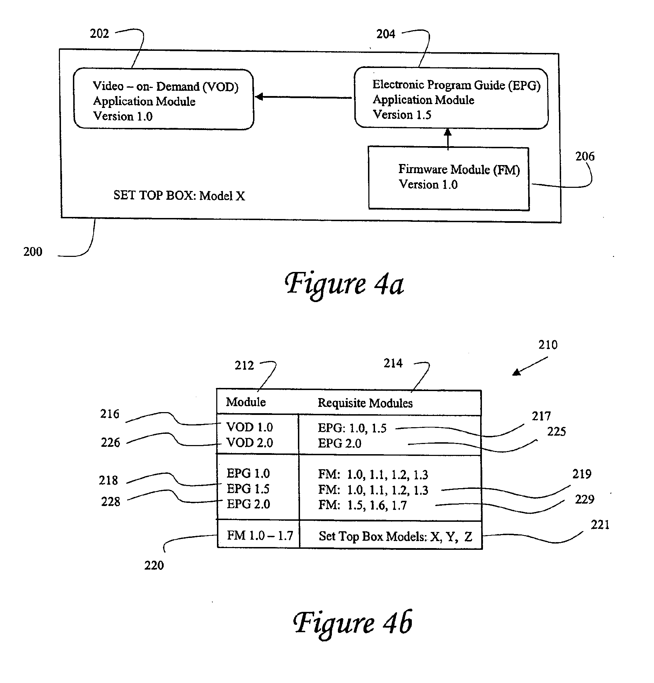

In the embodiment illustrated in Figure 1, it is presumed that cable service providers (a.k.a. cable network providers) (as exemplified via the enhanced services server), have access to host software as required and are authorized to load and use it. Figure 1 illustrates host software being stored in the HFD for use as needed by the cable network (e.g., the enhanced services server). While the host software modules can be transmitted from the HFD to the ESS when needed, including in real-time, the host software modules or object can also be transmitted to the cable provider via the local database prior to distribution of the software module to a host. No distinction is implied herein between the terms 'software objects' and 'software modules.' Specifically, the software modules can be stored by the cable network provider prior to use by the ESS in another local database (which will be discussed in conjunction with Figures 4a and 4b). The local database could be integrated with the ESS or accessible by the ESS via a LAN or other communication means as shown in Figure 1. In the latter case, the database could be local to the ESS, or could be remote and accessed by a plurality of ESS. The use of an additional local database provides a convenient local store for host modules and avoids replication of downloads from the HFD and facilitates ready distribution of software modules as required. Further, the download of software to an ESS prior to its use allows the cable provider to validate the software and correct any issues prior to the ESS requiring use of the software. In other embodiments, software modules can be obtained and validated from the HFD each time the module is required for use, however this causes modules to be downloaded multiple times. The software modules can be obtained by the cable provider in other ways, including delivery of a physical media (e.g., disc) to the cable provider.

The context of transferring software modules from a central repository (e.g., the HFD) to a cable provider is distinct from the transfer of software module from the local database to the host on the cable network. Although similar terms may be used (e.g., download, transmitted, distributed), the procedures involved are distinct.

Once the software modules are locally stored and validated for use by a cable operator, available methods for the transmission of the software modules on the cable network can be used to distribute the software. One available method involves using a process called a 'carousel' performed on a download manager to transmit software on the cable network by controlling which hosts can 'pick-up' information from the bus. The term "carousel" likely originated by analogy to a spinning carousel with bins containing items which are selectively 'picked-up.' The bins logically correspond to holding software modules and the host (which receives a bit mask code instructing them to read the information) 'picks up' the module as it passes by. Cable network providers may transmit software modules over the cable network on a periodic basis (a process called "spinning", analogous to the carousel appearing on a periodic basis). Thus, a host may have more than one opportunity to receive information. The term "carousel" does not apply to software distribution from a software manufacturer to the ESS. The term applies to distribution of the software from the ESS to the host on the cable network.

The host is separately instructed to 'pick up' or copy certain modules based on a download command. The download command, in one embodiment, can be thought of as a logical bit mask that instructs the host when to 'listen' and copy the modules. The download command can also convey further information such as which modules are also required as a prerequisite, if the host does not already have the prerequisite module. Such procedures are well known in the art of cable networks. Typically, the download commands are low-level commands that are not easy for humans to interpret or directly program.

Although the carousel can conceptually be viewed at a high level as the means for "downloading" software to a host, the carousel is not the same downloading mechanism as illustrated in Figure 1 over the Internet. In Figure 1, the downloading of information may involve using a computer networks and associated procedures for transferring information from a single originating entity to a single destination (point-to-point). However, distributing software to a host typically does not provide positive acknowledgement of reception, nor the ability to request retransmission in the case of an error. In general, many of the inventive principles of the present invention can apply regardless of the communication means used to transmit software either from the software producer to the cable operator, as well as from the cable operator to the host. For purposes of illustration, the software distribution to the host is illustrated in terms of using a carousel.

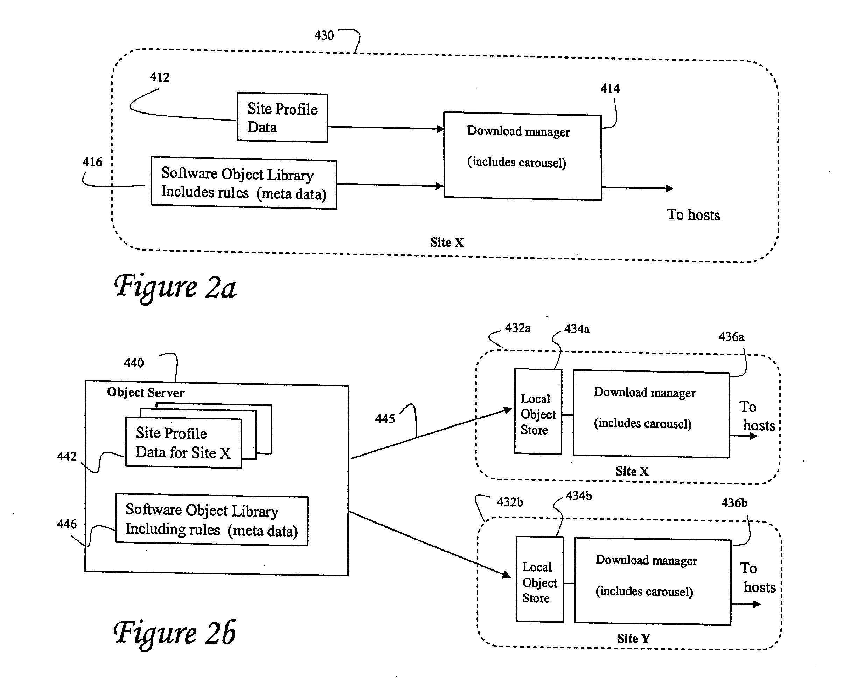

Figures 2a and 2b disclose alternative embodiments of the aforementioned local store (a.k.a. local database) of software objects. When the Host File Database distributes software, it typically provides for a plurality of types of software objects. These types include software objects for different vendors, different versions, and for different products. It is expected that a given cable operator may not require all types. Thus, to avoid storing unneeded software objects, some mechanism is required to selectively identify which are needed.

In Figure 2a, one such embodiment is disclosed. The dotted line 430 indicates that this represents a 'site' or a 'logical' cable network. A cable operator may have a number of cable systems, which are frequently in different cities. These can be considered by the cable operator as logically distinct systems, but within the overall part of the cable provider's operation. It is also typical that a cable operator has cable sub-systems in which different vendors' equipment are used, or equipment with different capabilities, or different versions of software are used. In Figure 2a, a single cable network is implied, and software objects are stored locally in a database 416. These may be obtained from the HFD in a variety of ways, some of which were already discussed.

The set of "site profile data" 412 describes information about the site-specific aspects that impact which software objects are applicable for that site. The site specific aspects may include the manufacturers of the equipment deployed in the cable network, software versions deployed, software compatibility information, capabilities of the software and equipment, etc. For example, the software object library 416 may store modules for certain versions of Brand X, Y, and Z set top boxes, but the site profile data 412 may indicate that only Brand X and Y equipment are used in this cable network site. In another example, the site-profile data may indicate a certain set of functions or capabilities associated with the site's video-on-demand services, which in turn impacts the selection of software object to accomplish a specific purpose. Thus, the download manager 414 may obtain information from the site profile data to ensure that it obtains the appropriate software modules for carouseling to the host, based on the particulars of that cable network.

Other embodiments are possible with respect to Figure 2a. It may be possible for the local software library (a.k.a. database) to use the site profile data to only store the applicable modules, and discard those that are not necessary. For example, the local software database may receive all versions of a particular software object, but the site profile data then screens out those that are inapplicable for this site. This essentially means for this particular embodiment, the site profile data is used as input to the software object library, as opposed to the download manager. In other embodiments, the software object could be directly loaded into the download manager, in which download manager uses the site profile data to perform the screening.

Figure 2b illustrates another embodiment. This embodiment reflects that many cable providers have a plurality of cable operations and may have cable networks in various cities served by a common infrastructure . In Figure 2b, two specific cable operations are illustrated. One is referred to as "Site X" 432a and the other is "Site Y" 432b. It is presumed for illustrative purposes, that Site X and Site Y employ different and incompatible equipment or functions, and therefore require different software objects. In this embodiment, the cable provider maintains a central software object library 446 that may be remotely located from each site (or it may be co-located with one of the sites). The library is contained within an Object Server 440 that maintains a plurality of site profile data, including one profile for Site X 442 and one for Site Y (not shown). The Object Server then "pushes" the appropriate software objects over communication links 445 to the respective site. In this case, the Object Server would use the Site Profile Data for Site X to transmit the appropriate software objects over the communications link to Site X 432a for storage in a Local Object Store 434a which can be accessed by the download manager 436a. Thus, the local database store can be thought of as comprised of both the software object library store 446 and the local object store 434. In some embodiments, the Local Objects Store 434 is part of the memory in the download manager, so that the two functional units are embodied in a single piece of equipment and are only logically distinct. In this manner, a cable operator with various cable networks can maintain a central store and download objects to the appropriate systems. In contrast to Figure 2a, where the download manager 414 pulled' the required objects from the software object library 416, in Figure 2b, the required objects were 'pushed' to the download manager from a central store. In some embodiments, it is possible that a combination will be used, e.g., some sites that 'push' objects to the download manager, whereas the download manager 'pulls' objects from other sites.

It is readily evident that various hierarchies and procedures can be defined for storing, screening, and transmitting objects to the download managers. Each relies on, at some point, information regarding that site's profile for purposes of selectively identifying the appropriate software objects for carouseling to a host. The use of site profile data facilitates distribution of the appropriate software to cable operators, as they can easily accommodate additions or changes to various types of hosts present on their networks without having to store large numbers of inapplicable software modules. By updating the site profile as required to accommodate new types of hosts, the appropriate host modules can be readily made available for downloading. Further, this avoids possible errors of downloading inappropriate modules to hosts.

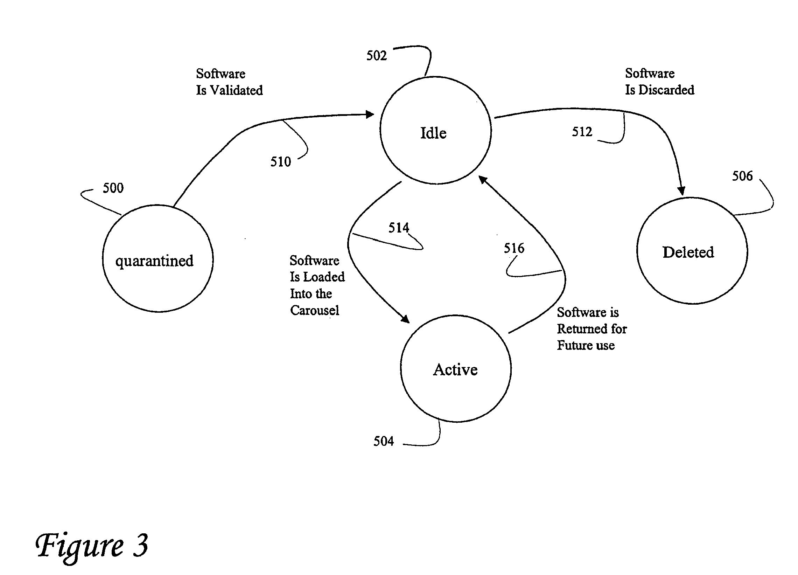

The transfer of software objects into the software object library of Figure 2 (regardless of embodiment) can be viewed as transitioning the software module through various states. These states reflect the use of the software object module. Turning to Figure 3, a state diagram representing the various states of a software module is shown. In the first state 500, the software is quarantined. This represents the initial transfer of the software into the local software object library. The software is typically not downloaded by the download manager until the software object is verified as valid as the correct software module. Validation typically involves using well known procedures for ensuring that the module has not been altered as well as authenticating the source of the module. Such well known procedures include using digital certificates or digital signatures to ensure the integrity and authenticity of the module. For example, it is possible the software module was inadvertently labeled or loaded as "module X" in the host file database (e.g., via a clerical error) and then transferred to a cable network operator's local software object store. However, in reality, the module is actually "module Y." If the cable network operator loaded that software module into a host without validating the software objects authenticity, an error would result. Thus, the cable operator may validate the origin of the software, validate that it has the proper rights to use the software, ensure that its contents has not been corrupted, etc. Validation may also involve ensuring that no transmission errors have occurred and the appropriate digital certificates apply.

Once validation has occurred, as represented by the transition line 510, the software enters an idle state 502. The idle state signifies that the software is available for distribution to hosts, that it is the software that it purports to be, that rights exist to use it have been obtained, etc. Once in this state, the download manager retrieves the software and places it into the carousel. Once the software is loaded, as represented by transition line 514, the software enters the active state 504. This state can also be called the "spinning" state, as the software is being actively distributed to the hosts by the download manager. Finally, when the software is done spinning, the download manager returns the software module to the library, as represented by the transition line 516. There, the software re-enters the idle state 502. Once the software is not required any more, the system can discard the software, as evidenced by the transition line 512 where it enters the discarded state 506. Typically, once the software is discarded, it cannot be retrieved without being validated again. Although Figure 3 is depicted in light of using a carousel approach, similar state diagrams can be defined in conjunction with using other approaches for transferring data to the host, such as client-server models as well as a variety of protocols (e.g., TFTP, FTP, etc.). In other embodiments, a fifth state, a dormant state, could be defined in which modules once used, but no longer actively needed, are put in storage. In this case, the modules can be reactivated to the idle state without having to be validated again.

In practice, most of the software modules required by the download manager are already in either the 'idle' or 'active' state. Typically, software modules are not retrieved from a quarantined state by the download manager, but have been previously obtained in anticipation of use by the download manager. The updating of host software for hosts in a large cable network can take several months and a single, mass update of all hosts may be impractical or undesirable. Typically, there are a variety of host devices and updates that need to be scheduled and coordinated. Further, hosts are constantly being added or removed from a cable network. Consequently, when a software module is being updated but is not present, the local database store retrieves the software from the host file database, validates it, and places it in the idle state, ready for use. The local database may retrieve the appropriate software under the command of the download manager. The download manager will retrieve the software, load it into the carousel (placing the software in the active state) and distribute it by making it available to the hosts by sending the appropriate download command. The software may be maintained in the carousel for an extended time period, and may be periodically made available to hosts. However, when the software is not longer required to be maintained in the carousel (e.g., in the active state), the software is placed back into the idle state. Of course, the software can be retrieved from the idle state back into the active state and typically, this process is repeated as necessary. Finally, when the system no longer needs the module (e.g., distribution has completed and/or the software is obsolete), then it can be discarded. However, once discarded, the software can only be distributed by retrieving (including authenticating) the software again. Consequently, the software library 416, 446, and 434 of Figures 2a and 2b illustrates only high level storage of the software modules which can be in various states.

The state of a software module does not necessarily imply a particular storage technology. Software modules that are "active" may be stored in the systems' memory as are software modules that are "idle." This could be primary memory or secondary memory (e.g., disk storage). Alternatively, "idle" software may be stored on disk. No particular implementation embodiment is required based on the state of the software modules.

Now that the appropriate software modules are available for downloading, the complexities of coordinating the downloading are considered. One example illustrating the complexities of managing host software distribution is illustrated in Figure 4a. In Figure 4a, a set-top-box 200 (STB) is logically illustrated and it is assumed the STB provides a movie-on-demand service, allowing a viewer to select a movie from a menu for viewing. The service is provided using a Video-on-demand (VOD) application executing in the STB. The VOD application 202 requires knowledge of which movies are available for selection by a customer, and this information is obtained using an electronic program guide (EPG) module 204. The EPG is a separate software module that may be present even if the movie-on-demand service is not offered to the user. The EPG processes information and provides the user with information regarding available program services. One function of the EPG is to provide program information in human readable form, but the EPG also provides program information to other applications, such as the VOD application, in a form understandable to the application. Because the VOD application presents the user with a list of available movies, a distinction must be made (either by the VOD or EPG application) between available video-on-demand programs and other non-on-demand programs. Consequently, the VOD application (which may be specific to the manufacturer of the VOD server) presents available movies to a user to select using information provided from the EPG. In turn, the EPG obtains information using other software modules, specifically a firmware module 206 that processes the program guide information distributed on the cable network. In other embodiments, the EPG may rely on using other communication modules for obtaining program information from a third party (e.g., via a module controlling a telephone interface for calling a server or a module interfacing with an IP based high-speed data capability). In summary, the VOD module 202 requires information from the EPG module 204, which in turn, requires information processed by the Firmware Module 206. Other modules may be involved, but this configuration is sufficient to illustrate aspects of the present invention. In Figure 4a, each of these modules is illustrated as having a certain version number. It is well known that software in STBs is frequently modified and new software versions are distributed to the STBs. Thus, the version number is a convenient method of identifying a software module present.

Because different software versions of a given module have different capabilities, it is important to coordinate the particular versions of the various modules for use with other modules. For example, it is improper to assume that all modules having the same version number (e.g., Ver 1.0) are all compatible with another. Rather, only certain versions of a module may be compatible with other modules and rules are required to know which modules are compatible with other modules.

Figure 4b illustrates compatibility information among these various modules. Typically, different software versions are available by the cable operator and may be loaded into a set-top-box. The compatibility table 210 indicates for each indicated module 212, which other modules 214 it is compatible with. Thus, for example, VOD module 1.0 216 is compatible with EPG modules 1.0 and 1.5. EPG Module 1.5 218 is compatible with Firmware Modules 1.0,1.1, 1.2, and 1.3 219. Finally, Firmware Module 220 is found in Set Top Boxes X, Y, and Z 221. Absent such a compatibility table comprising such rules, it may not be readily evident which modules are compatible with each other. Logically, the rules may be envisioned as a 'rules table', but the rules are dynamically derived from the metadata obtained from the relevant software modules. Thus, there usually is not a single, *a priori* established 'rules table' that exists independent from the relevant software module.

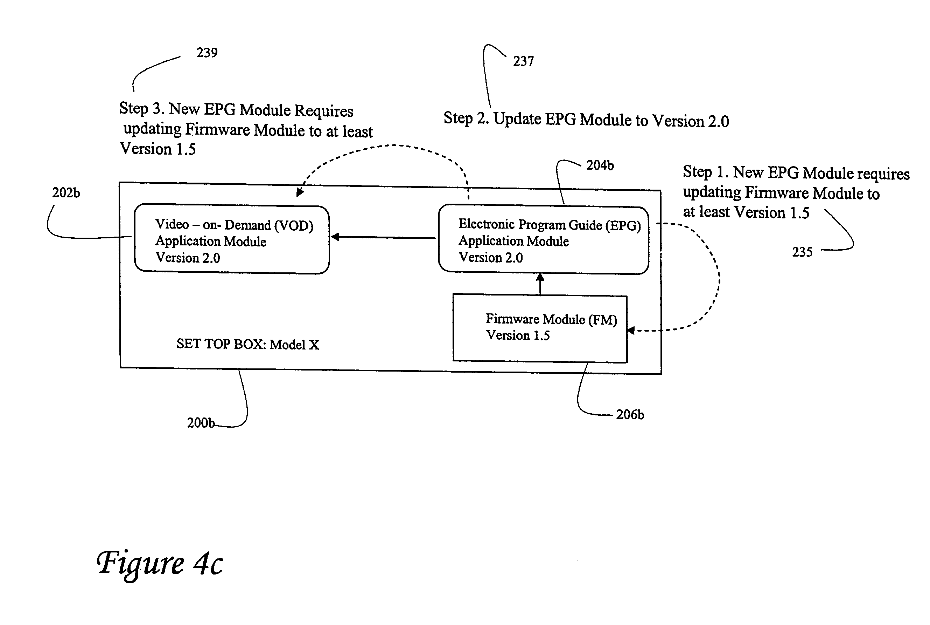

Now consider that the network operator desires to upgrade to the latest, or at least a newer EPG module version in the STB. The reasons for doing so vary, including that it is possible that the new EPG module corrects a software bug, or adds a new capability, such as providing additional information regarding available programs. In Figure 4c, the goal is to install and execute EPG Version 2.0 204b in the STB 200b. It is known from Table 210 that EPG 1.0 and 1.5 217 is compatible with VOD 1.0 216. However, as determined from the compatibility table in Figure 2b, EPG 2.0 225 is not compatible with VOD 1.0 216, but requires VOD 2.0 226. Similarly, EPG 2.0 228 requires Firmware Versions 1.5, 1.6, or 1.7 229. Finally, all the Firmware Versions 220 are compatible with STB Model X 221. In summary, in order to update the EPG program on the STB Box Model X to EPG 2.0, the Firmware and VOD software modules need to be updated as well. The requirements may be different for another STB Box model or manufacturer. Thus, the above rules may be vendor specific.

A complicating matter is that not only are certain combinations of versions required, but there may be a particular order required to update each module. In Figure 4c, the order is illustrated with Step 1 235 as first loading a more recent version of the Firmware Module 206b, namely Firmware Module 1.5. Next, the EPG Module Version 2.0 is loaded in Step 2 237, and finally, after this has been completed, the last step is Step 3 239 that upgrades the VOD application 202b to Version 2.0. The "order" of updating does not necessarily mean that the software must be distributed in a certain time order - it may refer to which is activated in the host first. "Updating" the STB can mean that a host is instructed to activate one module before another, or requiring one module to be present in a host prior to activating another module in the host.

It is evident a module can be designed to interface and function with certain other modules, and updating one module may require updating other modules as a prerequisite. Thus, incorrectly managing the distribution of software can result in disabling certain applications or other adverse consequences. For example, failure to update the VOD application after updating the EPG application may render the VOD application inoperative. Failure to perform software distribution in the proper order may have other consequences, including causing certain services being "stranded" (unable to be used) in certain circumstances. Distributing a new VOD application without first updating the EPG may result in the VOD unable to receive information regarding available movies for viewer selection.

The distribution of software modules can be categorized in two ways, which corresponds to different procedures coordinating the download. These are sometime categorizes as "broadcast" downloads and "on-command/demand" downloads. The broadcast download is typically associated with updating a large number of hosts, typically on a wholesale basis. Typically, this occurs when the operator is performing system wide upgrades, such as installing a new software object for all hosts, or for all hosts of a particular type. This is often associated with cable network-wide related updates. The 'on-command', or 'on-demand' downloads are designed to target a smaller population of hosts, including a population comprising a single host up to a large number of hosts. The distinction between on-command and on-demand is relatively minor, in that on-command is typically initiated by the network, whereas on-demand typically is initiated by a host. These involve slightly different process flows, but an on-command download can accomplish the same result as an on-demand download. For example, whatever software objects a host can request and receive from the cable provider can also be sent by the cable network operator initiating a command to the download manager. The reverse is not true. A cable network operator can initiate a download to a set of hosts, but a particular host cannot initiate a download for the same set (e.g., involving other hosts).

Regardless of which scheme the distribution may be categorized by, the ability to distribute updated software versions to a host introduces various complexities in conjunction with downloading the software. One approach is to manually determine which modules are compatible with other modules in the target hosts, and manually determine what order, if any, is required to distribute the software. This requires an accurate indication of what modules and their versions are current resident in the host. Success or failure can depend in large part on the skill of the person managing the download. This can be an error prone and complicated process. Further complicating the process for the cable network operator is that the identification and indication of software objects is accomplished via alphanumerical identifiers, not via human readable words. Thus, manually downloading software modules requires an automated aid.

One aspect of the present invention involves reliance on intrinsic rules to simplify (e.g., abstract) the process for the cable network operator. As previously discussed in conjunction with Figure 2, one approach for simplifying software distribution relies on maintaining information via a site profile regarding what type of modules are needed. Another approach involves maintaining information regarding the hosts connected to the network. This involves maintaining information of what type of hosts are present and their capabilities. This process involves associating a host with an appropriate host profile.

There are various 'profiles' involved in creating an efficient, yet flexible architecture for selecting the proper software objects to download to a host. One such profile was discussed in the form of the site profile. Another profile is the subscriber profile or subscriber service profile. The subscriber profile contains information about a subscriber, such as their name, service address, billing address, and an indication of what services they are provided. Typically, there is an associated set of various services levels and prices, so that the subscriber profile is related to subscriber billing. Typically, different service levels and options can be provided to a subscriber. These services levels are used to further identify certain capabilities associated for accomplishing the service. Since a subscriber is further associated with a host or set of hosts, the network maintains information for allowing a subscriber to be associated with certain hosts. For example, a subscriber modifying their service level to add a premium channel or service package requires the network provider to know which hosts are to be authorized for accomplishing the new services.

Another profile that has to be maintained by the network involves knowledge of the capabilities of a given host connected to the network. This requires the network to maintain information of the type of host and what capabilities are associated with it. At a high level, this can be called a 'host profile.' This can be thought of as the collection of information maintained by the cable operator providing information about the current capabilities of a particular host or class of hosts. For example, a host can be embodied in various forms of consumer electronic devices with various levels of functionality. A digital television having certain capabilities (e.g., which may incorporate a single HDTV tuner, or two tuners for providing picture in picture capabilities) may be associated with a certain host profile. A television with an integrated digital video recorder may be associated with a different host profile. Obviously, providing a DVR service to a subscriber requires the subscriber to have a host in some form with DVR functionality or capabilities. The network has to enable the functionality in the host, and thus needs to know specifics of the particular host's DVR capabilities.

Associating a host with a host profile can be accomplished in different ways. In one approach, a single set of information can be maintained describing the current capabilities of a particular host. In another approach, a first set of information maintains information about the base capabilities of the host, and a second set of information maintains information about changes in capabilities to that host (e.g., 'enhancements'), so that the combination of the two sets provides a present and current indication of the host's capabilities. The host's capabilities are determined by which software modules have been loaded, enabled, and are functioning in the host along with inherent capabilities of the host. Thus, a host having DVR hardware, but which is not enabled, is really not capable of providing a DVR service. Further, the DVR not only has to be enabled, but may require a current version of a software object to be compatible on the cable provider's network.

In order for the network to know what capabilities to associate with a host, it is necessary for the host to identify itself in some manner. In one embodiment, a host can make itself known in some manner to the network. One approach is for the host to identify itself to the network automatically upon initial connection. Alternatively, administration personal could manually provide host identification information to the cable network using various operational and provisioning systems. In either approach, the result is that host identification information is obtained in the network, allowing the network to associate the host with a profile of capabilities (e.g., the host profile). Once this is accomplished, the network is able to effect the downloading of software objects to the host as necessary.

In situations where the host identifies itself, various conditions may trigger a host in different ways to initiate this process. These all result in the host providing some information regarding its capabilities to the network so that the network can associate a host with the appropriate host profile.

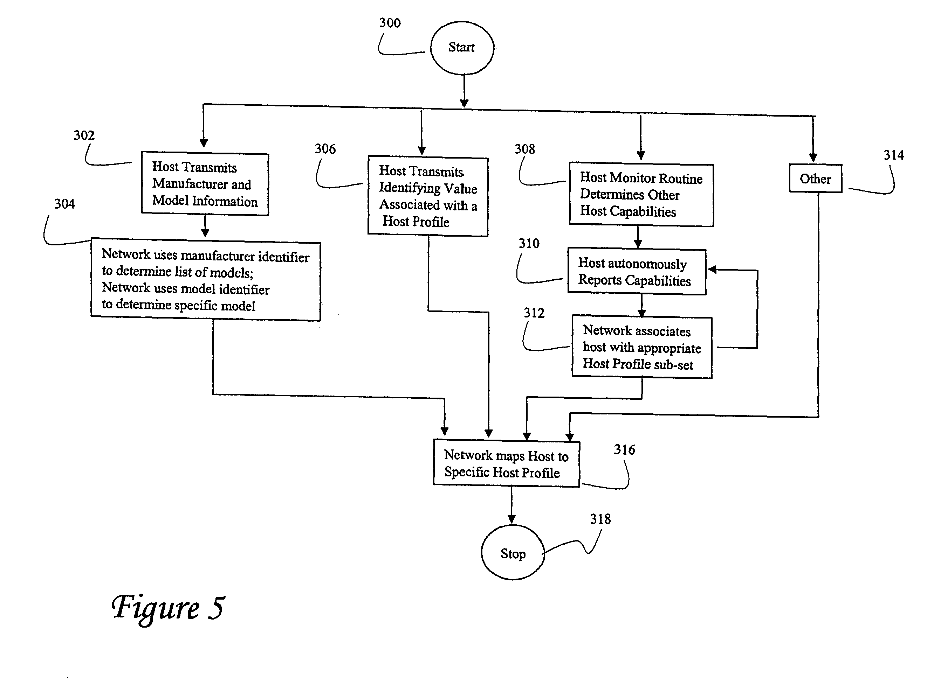

The association of a host with a host profile can occur in different ways. Figure 5 illustrates various embodiments of a host identifying itself for purposes of being associated with a host profile. In Figure 5, beginning with the first step 300, the first embodiment 302 involves the host transmitting two data items. In this embodiment, the host transmits a terminal manufacturer identifier and a model identifier 302. This embodiment presumes that a recognized and unique format is used for identifying the manufacturer, which could be based on an industry standard (e.g., using the initial digits of a MAC address for manufacturer identification). Within that numbering space, each manufacturer uses a unique identifier (unique within the numbering space of the manufacturer's address) associated with a particular model. In this embodiment, the network then uses this information to map the host to a particular host profile 304. The host profile is defined to reflect the capabilities associated with that particular host make and model. It is possible that the host profile could be defined narrowly (e.g., specific to that make and model), or it could be defined more broadly so that various similar host make and models can be associated with the same host profile. Those skilled in the art will be able to devise alternatives to this embodiment, such as defining a single combined manufacturer/model identifier using various encoding or syntax structures. Regardless of the encoding specifics, the host transmits information about itself allowing the network to associate it with manufacturer-specific information identifying certain capabilities inherent with the host. Once this is known, the host can be mapped to a host profile in step 316 and the association complete at step 318. In this embodiment, the host may also transmit further information, such as a serial number, allowing that host to be distinguished from other hosts of the same make and model.

In a variation of this embodiment, the host can simply report a host profile number 306 that directly identifies a host profile. This presumes that such values are well known for each type of host profile. This is accomplished by industry agreement as to certain capabilities associated with a host profile number. This approach allows the network to map the host to a profile in step 316, and the process is completed 318. Such a generic host profile could be common to a single or a plurality of manufacturers, with values defined for additional capabilities. Such a host profile may allow a minimum subset of capabilities to be recognized in a certain type or class of hosts. These and other variations allow a network provider to recognize a minimum level of host capabilities in the host. Again, the host may transit further information to allow the network to distinguish it from other hosts.

In another variation illustrated in Figure 5, the host incorporates a software module monitoring routine, which is able to query other routines in the host (or somehow otherwise ascertain or inventory the capabilities built into the host), as indicated in step 308. The host then autonomously (or in response to a triggering event) reports its capabilities individually in step 310, allowing the network to determine the appropriate sub-profile in step 312. This process may be repeated if all the capabilities cannot be reported in a single report. Unlike the previous approaches which use a single identifier to map to a set of capabilities, each capability is defined by an identifier and separately reported by the host. One protocol that could be adapted for this purpose is the Simple Network Management Protocol (SNMP) that allows reading and writing of parameters in a Management Information Block (MIB) of data.

Finally, other mechanisms can be defined, as shown in step 314 of Figure 5 that includes the possibility of allowing the network to query the host. For example, the network could send commands to the host, which would initiate the host reporting host identification data (e.g., manufacturer and model information, serial number, capability identifiers, etc.). The host can report its data via XML tag-based format, or via SNMP. The network could receive in response one of the aforementioned identifiers. Alternatively, the host profile to be defined by a network administrator or other personnel at the time of activation on the network, without requiring interacting with the host and the network.

In each of the above embodiments, the host may transmit other unique information, e.g., either numerical or alphanumeric information, such as a serial number. This may be used in other embodiments for associated a host with a service profile, or for other identification purposes in order to distinguish one host from another.

While a host is typically associated with a single host profile, in other embodiments the host can be associated with multiple profiles. An alternative previously identified was a host identified by a host profile, which in turn is mapped or defined by two other host profiles. For example, a particular host may be embodied as a high-definition television with an integrated HDTV tuner. This could be mapped to a particular video-based host profile. The host manufacturer may build another model of the host, an 'enhanced IP capable television' version having an integrated DOCSIS high-speed data modem. The enhanced IP capable television device can be used by the consumer to browse the Internet. In this case, the 'enhanced IP capable television' version of the host profile may be defined as the combination of two separate host profiles - a host profile having video oriented attributes and a separate host having a data-oriented host profile. This can be implemented using 'linked' data structures. Alternatively, a single separate host profile can be defined for the combination of capabilities, which could be implemented as a single data structure.

It is readily apparent that various tradeoffs and options are possible with respect to mapping a host to one or more host profiles. Further, other embodiments can define a host profile as a hierarchy of other host profiles. Allowing a host to be associated with multiple host profiles reduces the number of permutations of possible host profiles compared to when a host is associated with only one host profile. To an extent, such definition of host profiles can be defined by the cable operator, industry standards, or both. Any of the above embodiments and their variations are within the scope of the present invention.

Because software objects can be downloaded to a host for purposes of upgrading it (thereby altering its capabilities), the current host profile of a host must be known. There are two ways to accomplish this. First, a current single host profile for a host can be defined. The host may be associated with this host profile upon initialization. Alternatively, the host may be associated with a combination of data structures, where one data structure describes a set of base (or generic) capabilities associated with that particular host and another data structure indicates the changes that have since occurred to that host. In essence, by knowing the starting point and the changes that have occurred to a host, its present capabilities can be identified. For purposes of nomenclature, the "current" host profile is the single data structure, whereas the "generic" host profile is the capabilities associated with that particular host and a "host inventory" profile identifies which changes have occurred to the host, typically in the form of indicating which software objects have been downloaded to the host. Thus, one embodiment of a host profile is to use a generic host profile in combination with a host inventory profile.

There are various ways that the host identification information described in Figure 5 can be associated with either a current host profile, or a combination of generic host profile and host inventory profile. First, consider a single current host profile. In each of the examples disclosed in Figure 5, the host identification information, whether it be in the form of a manufacturer and model identifier 302, a single alphanumeric value 306, or explicit reporting of capabilities 310, or other form, the network is able to map the host to a particular current host profile. Now, consider the embodiment where a generic host profile and a host inventory profile is being used. In this case, the host identifier is in the form of a manufacturer and model identifier(s) 302 allowing determination of the generic service profile. Additional unique information may be conveyed with the host identification in the form of a serial number (or alphanumeric information) to allow the network to identify the host inventory profile for that host. The combination therefore allows the network to know the current host profile for that host. Similarly, the host may provide simply a unique identifier, of which a first portion is used to select one of a plurality of industry defined generic host profiles, and another portion of the identifier is used to identify a particular host inventory profile. Finally, the host may report its capabilities individually, which the network can map to a generic host profile and a host inventory profile. Typically, though not required, if the host reports its capabilities individually, the network maps the host to a single current host profile, rather than a generic host profile and a host inventory profile.

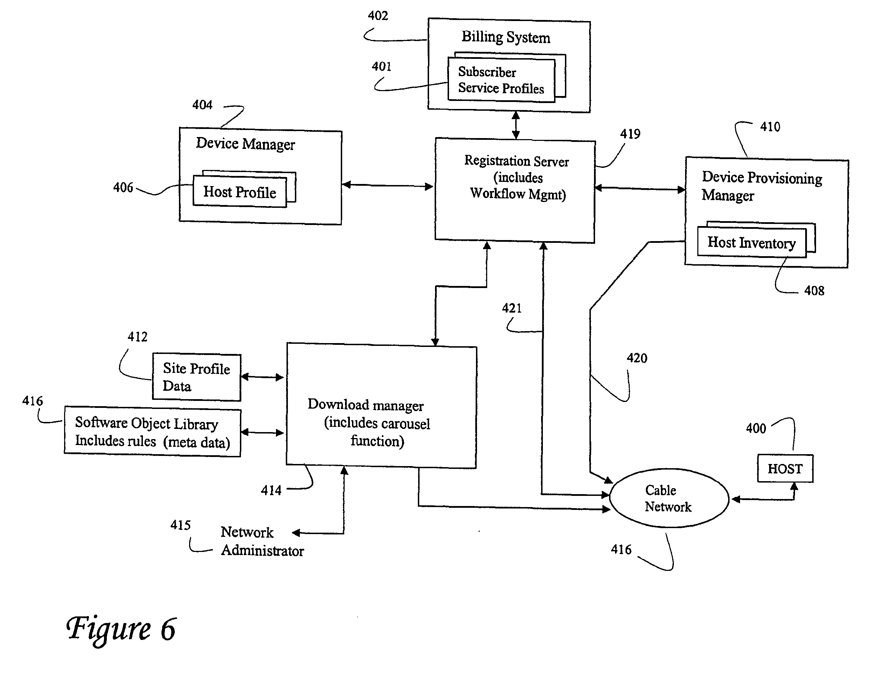

The functional components used to associate a host with a host profile as well are shown in Figure 6. Figure 6 represents one possible architecture for downloading software objects to a host and is based on the embodiment where the network maintains a generic host profile and a host inventory profile that is associated with a host. The following provides a brief overview of the functionality of each of the components in Figure 6.

### Download Manager

The download manager's 414 main function is the distribution of software modules to the cable network. This occurs via a carousel, and the download manager ensures that modules to be downloaded are 'spinning', e.g., in the active state. The download manager maintains the set of software modules in the various states, as discussed in conjunction with Figure 3. As previously indicated, the download manager may be embodied with an integrated software object library, or a remotely located library. Idle objects may be stored in the library, or in the download manager, but active objects are present in the download manager (although copies may also be maintained in the library). The download manager may also enforce various rules that are defined by each software module, e.g., prerequisites or other requirements associated with that module. Thus, a software module may define certain rules regarding order of download with respect to other modules, or prerequisites for downloading a module that the download manager enforces.

Although the present invention is disclosed using carousels, other approaches for transfer of the modules can be used, such as using a file server transmitting data via a high-speed data connection to a host (e.g., using an internal DOCSIS modem or other separate data communication channel on the cable network allowing the host to receive the data). Other alternative architectures can use a client-server approach, employing other well known file transfer protocols (e.g., Multicast HTTP, FTP, TFTP, OSI protocols, or other data transfer protocols) or other schemes (e.g., polling, on-demand, or on-command schemes) for downloading. Thus, although Figure 6 illustrates a carousel, other transfer means used in cable systems are possible and within the scope of the present invention.

The download manager can also receive commands from network administrators 415 via a terminal interface, or an interface to another system, for initiating on-command downloads. The download manager may map the on-command download command to a defined script indicating which modules are to be downloaded.

### Site Profile Data

The download manager 414 is closely linked with the site profile data 412. As previously indicated, the site profile data contains information specific to the cable network 416 which the host is operating within. The site specific information may provide information regarding the specific manufacturers, equipment versions, application modules, application versions, capability sets, or architecture details necessary to properly select a particular software module for operation on that cable network. For example, the particular version of an EPG software module to be downloaded on a cable system may depend on the manufacturer and version of certain headend equipment deployed in that cable operation. In another example, enabling a video on demand service may require selection of a particular software object to a host, where that object depends on certain capabilities present in the network video-on-demand server.

### Software Object Library

The software object library 416 stores the software objects in anticipation of carouseling the software objects. In one embodiment, the software object library 416 can be a portion of the download manager 414, and between the two components, the necessary software objects can be found in one of the variously defined states. The appropriate objects to be carouselled are stored in either the library and/or the download manager. As previously discussed, there are various architectures that can be defined to accomplish involving the download manager 414, software object library 412, and the site profile data 416.

### Device Manager

The device manager 404 provides information regarding the current capabilities of a host. It maintains a plurality of host profiles 406, and a host will be associated with a particular host profile. Thus, information regarding a specific host can be provided by the device manager, typically to the registration server. As new hosts are created by manufacturers, new host profiles are defined. The host profiles may be provided by the manufacturers and may be specific to that manufacturer, or the host profile may be defined by industry consensus, and reflect a minimum capability set for a particular category of host. It is expected that a host initially connected to the network is associated with one of the host profiles.

However, over time (and in some cases, immediately after initial installation), software objects may be loaded into a host, thus upgrading it from the base level of capabilities associated with it when it was initially installed. One approach for the current information for a given host is to maintain information of what modules were downloaded to that host. This is the function of the host inventory profile 408. The host inventory, in this embodiment, is stored in the device provisioning manager 410, although other embodiments may store the host inventory profile 408 in the device manager 404. The host inventory may be indexed by each hosts' MAC address or serial number, or some other unique identifier of the host.

### Device Provisioning Manager

The device provisioning manager 410 is capable of issuing host-specific commands. These commands are usually ancillary to the download process. For example, in conjunction with providing a host with new capabilities, it may be necessary to re-partition a hard-drive in the host. The act of repartitioning is separate from downloading a module, but may be necessary to prepare the host to accept the module. The Device Provisioning manager is aware of the host-specific attributes and is able to formulate the appropriate commands to the host as directed by the Registration Server.

### Billing System

The billing system 402 maintains subscriber service related information, and typically maintains a plurality of subscriber service profiles 401. The structure and function of the billing system varies and is implementation dependent. There are other embodiments for storing subscriber service profiles. The subscriber service profile maintains information regarding the service level for a given subscriber. This in turn must be mapped to services provided to hosts, which in turn determines if certain software objects must be downloaded to a host. In most cases, software objects downloaded to a host are not triggered based on a change of subscribed services by the subscriber. However, when the subscriber does alter their services, it is quite possible (but not always required) that additional software objects must be downloaded to a host. The subscriber's service profile usually does not maintain low level information, such as which software objects are required to be downloaded, but it does communicate with the registration server in case subscriber service levels have to be known in order to effect the appropriate download of modules, or if changes to the subscriber service level have occurred.

### Registration Server

The registration server 419 is an overall process manager, and incorporates a workflow manager for ensuring that all the above mentioned functional components provide the necessary information at the proper time, as well as determining if one of the above functional components needs to be checked. For this reason, the registration server communicates with each of the above entities, instructing each when certain actions have to be done.

### On-Command/On-Demand Update

The role of the registration server is best illustrated in conjunction with an on-command/on-demand update. Specifically, an on-command update is illustrated where a host identifies itself to the cable network. The process starts with the registration server receiving a message 421 from the host 400 identifying itself, which results in the host being associated with the host profile.

The registration server uses the host identification data to retrieve a host profile 406 from the device manager 404 appropriate for that host. The registration server 419 also uses the host identification data (which can comprise additional information unique to the host, such as a serial number) to ascertain what upgrades have previously been provided to the host by accessing the host inventory 408 in the device manager 410. Since the host is initializing for the first time, there would not likely be any record of previous updates in the host inventory for that host. The registration server would also obtain the appropriate subscriber service profile to ascertain what services the subscriber is associated with. The registration server must ensure that the appropriate software objects are provided via the carousel to a host to enable the services the subscriber is paying for. The registration server indicates to the download manager the required object to be set spinning in the carousel. In some instances, the required object may already be spinning, whereas in other cases, one or more may be required to be loaded by the download manager. In addition, the download manager informs the host via a download command which modules are to be picked up. Finally, the registration server will inform the download manager that the task is completed and the module are no longer required in the carousel.

The registration server coordinates the timing of the tasks. The registration server may perform the above tasks in a given order, or may perform them in parallel, if feasible. In many instances, the nature of the request will dictate that information be obtained in a particular order. If errors are encountered (e.g., data is temporarily inaccessible), the registration server must act accordingly to recover from the error, as well as ensure that all the required information is obtained before proceeding.

The registration server indicates to the download manager information allowing the download manager to select the appropriate software objects. In various embodiments, the information provided to the download manager can vary. In one embodiment, the download manager has limited intelligence, and provides fairly specific information regarding the objects is provided by the registration server. In a preferred embodiment, the download manager has more intelligence, and the registration server provides a high level command and the resulting profile information to the download manager which the download manager uses to determine which objects are required. For example, the registration server may indicate the associated profile information and service level to the download manager. The download manager then uses the information provided to it comprising profile data, host inventory profile data, and site profile data to ascertain the appropriate objects to select for downloading. Once determined, the download manager can ensure the appropriate objects are spinning on the carousel.

The download manager may acknowledge this step to the registration server, allowing the registration server to then notify the device provisioning manager to initiate a download command to the host. Without the appropriate download command, the host terminal would not pick up the objects. The download command can be of various forms, including a bit-mask command. In other embodiments, the download manager can also transmit an XML command script (or other language) to the host for purposes of enabling the host to load the appropriate objects. Once the appropriate modules are loaded, the host inventory profile for that host is updated to reflect that the host has been updated. In some embodiments, the host may provide a positive acknowledgment of receiving the modules, whereas in other embodiments, the download manager can presume the host has received them.

### Broadcast Update

The download manager allows a network administrator (or other system) to create a broadcast update for a large number of hosts. In this case, a network administrator via a user interface (such as a graphical or command language) can select one (or more) software objects for distribution. This can be done by selecting the particular object(s), or more than likely, selecting or indicating a command resulting in one or more objects being downloaded. The download manager also determines a set of modules that are prerequisites for operation of the indicated module and also checks to ensure that selected modules are compatible. For example, if the user selects to update a VOD-related module, the download manager ensures that only compatible firmware modules are selected for that host. The selection of a module may occur using any of the well known user interface techniques, such as pull-down menus, selecting icons, etc.

The download manager may use rules, such as those illustrated from Figure 4b as an example, to ensure the proper selection. For example, based on Figure 4b, selecting to update a EPG 1.0 module would only be allowed if the host already has (or is also downloaded) one of the Firmware Modules 1.0,1.1,1.2, or 1.3. The system would not allow combining a EPG 1.0 module with a Firmware Module of 1.7 since they are incompatible. Similarly, the system would know that EPG 1.0 module would only be compatible with a VOD 1.0 module (not an VOD 2.0 module). These rules typically are included with each software module in the form of meta-data, although other embodiments could collect the rules into a single meta-data file. Regardless, the download manager uses the rules to ensure that only compatible information is downloaded to a host.

The download manager can further abstract the download scenario creating process by recognizing various commands entered by a user in conjunction with a module. Thus, a network administrator could enter via a command language 'Upgrade all VOD 1.0 modules on Brand X television hosts to VOD 2.0 modules' or 'Upgrade all Brand X STB units to the most current VOD version." In the former example, the system would know that VOD 2.0 is incompatible with EPG 1.0, and would thus also upgrade the appropriate hosts having EPG 1.0 to a compatible version (e.g., EPG 1.5). In the latter version, the system would know the current VOD versions and which Brand X STB units have the current VOD version and which should be updated. Similarly, the download system also knows which firmware modules are required, and appropriate updates these are required status and linking of each of the modules associated with creation of a download command.

The rules used by the download manager to avoid incompatibility between modules are typically contained in meta-data, which can be broadly construed as data that describes other data. Meta-data is associated with the software modules and can be processed at various entities. An example of such meta-data was disclosed in Figure 4b, in the form of a table describing certain compatibility information for each module. Figure 4b contained a relatively simple set of rules, but illustrates one type of compatibility information that must be checked across modules. Other compatibility rules are present, such as incorporating site-specific information as to which modules are to be distributed as well as the order of the modules. Other criteria can be defined as well as part of meta-data, such as which host types are compatible with the module. Meta-data could be provided in tabular form, separate from the modules themselves. Typically, the provider of the software module indicates the compatibility information with the module itself, as well as tests and certifies a given modules as being interoperable with other specified software modules. If so, then a separate file may not be required for the download manager to process the module to ensure compatibility with other modules. Thus, in conjunction with the software module code, the software object code developer provides meta-data describing the software module, such as its creation date, version number, originator information, as well as information regarding which other modules it is compatible with and required to interwork with and sequence information indicating how the module should be loaded. Other information can be provided as well, including information regarding configuration information. The meta-data associated with a software module pertains just to the module itself and possible dependencies on other software or hardware features. Thus, returning to the rules indicated in Figure 4b, the meta-data for a given module would not contain all the information found in Figure 4b, but only a subset of that information pertinent to the module at hand.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for distributing a software module comprising the steps of:
a. receiving host identification data from a host (400) connected to a cable system (416);
b. determining (604) a host profile (406) for the host using the host identification data;
c. determining a subscriber service profile (401) for a subscriber based on the host identification data wherein the subscriber is associated with the host;
d. determining (612) a site profile (412; 442) associated with the cable system;
e. selecting at least one software object from a software object library (416; 446) for download to the host based on the subscriber service profile, the site profile, and the host profile;
f. loading (614) the software object into a download manager (414; 436) for transmission over the cable system;
g. instructing the host to retrieve the software object; and
h. transmitting the software object to the host.

2. The method of claim 1 wherein the host identification data comprises a manufacturer identifier associated with a manufacturer and a model identifier associated a host model produced by the manufacturer.

3. The method of claim 1 wherein the host identification data comprises an alphanumerical value associated with an industry agreed-to host profile.

4. The method of claim 1 wherein the host profile (406) is determined by processing a generic host profile associated with the host (400) and a host inventory profile (408) associated with the host.

5. The method of claim 1 wherein the host initiates (612) transmission of the host identification data upon initial connection to the cable system.

6. The method of claim 1 the host profile is a manufacturer defined host profile.

7. The method of claim 6 wherein the manufacturer defined host profile is identified using a first part of the host identification data to identify a manufacturer and a second part of the host identification data to identify a host model.

8. The method of claim 1 wherein the selection of one of the plurality of host profiles (406) involves identifying one of a plurality of host profiles defined by an industry trade group.

9. The method of claim 1 wherein the selection of one of the plurality of host profiles (406) involves using an alphanumeric serial number transmitted by the host to identify a host inventory profile associated with the host.

10. The method of claim 9 wherein the host inventory profile (408) identifies previously downloaded software modules to the host.

11. The method of claim 1 wherein the subscriber service profile (401) indicates services provided to the subscriber associated with the cable system (403) and wherein the host identification data is associated with the subscriber.

12. The method of claim 1 wherein the site profile (412) comprises data regarding functional capabilities associated with providing services to a host (400) in the cable system (403).

13. The method of claim 1 wherein the site profile (412) further comprises software version identifiers associated with providing services over the cable network (403).

14. The method of claim 1 wherein the software object library (416) contains a plurality of software objects for a plurality of hosts (400), the plurality of hosts associated with a plurality of manufacturers and wherein the software object library further comprises a plurality of software objects for a plurality host models from a single manufacturer.

15. The method of claim 1 further comprising the step of: selecting a second software object based on a rule associated with the first software object wherein the rule indicates (620) that execution of the first software object is predicated on the second software object being present in the host (400).

16. The method of claim 1 wherein the software object is downloaded into the software object library (416) and authenticated (510) prior to being available for selection.

17. The method of claim 1 wherein the loading of the software object into the download manager (414) comprises changing the state of the software object from an idle state (502) to an active state (504).

18. The method of claim 1 wherein instructing the host (400) to retrieve the software object involves sending a XML-based download command to the host identifying the software object to retrieve.

19. The method of claim 1 wherein transmitting software to the host (400) comprising using a carousel.

20. A method for downloading software comprising the steps of:
a. receiving a command at a download manager (414) for updating a host (400) connected to a cable network (403) wherein the host is identified by host identification data;
b. identifying a host profile (406) associated with the host;
c. identifying (604) a host inventory profile (408) associated with the host; identifying a site profile (412) associated with the cable network;
d. using the host profile, the host inventory profile, the site profile, and the command to identify at least one first software object;
e. determining the at least one first software object is active in the download manager;
f. generating a download command to the host, the download command instructing the host to retrieve the at least one first software object from a carousel; and
g. transmitting the first software object on the carousel onto the cable network (403).

21. The method of claim 20 wherein the host identification data comprises a host manufacturer identifier associated with a manufacturer of the host, and a model identifier associated with a host model of the manufacturer.

22. The method of claim 21 wherein the host identification data further comprises a unique host identifier and is used to identify a host inventory profile.

23. The method of claim 20 wherein the site profile (412; 442) indicates functional capabilities associated with providing services over the cable network.

24. The method of claim 20 wherein the at least one software object is retrieved from a software object library (416).

25. The method of claim 20 wherein retrieving the first software object from the software object library (416) further comprises retrieving a second software object base on a rule associated with the first software object, wherein the rule indicates (620) the second software object is necessary for proper operation of the first software object.

26. The method of claim 20 further comprising retrieving a second software object for downloading to the host based on the command received by the download manager (414).

27. A system for downloading a software object to a host (400) on a cable network (403) comprising:
a. a site profile database comprising data (412; 442) pertaining to capabilities associated with the cable network wherein the capabilities are used to define services provided to the host connected to the cable network;
b. a software object library (416; 446) storing a plurality of software objects, including the software object downloaded to a host;
c. a download manager (414; 436) operatively connected to the site profile database and the software object library (416), the download manager capable of receiving site profile data (412) from the site profile database, the download manager further capable of receiving the software object from the software object library (416), the download manager configured to download the software object to the host;
d. a device manager (404) comprising host profile data (406) associated with the host, the host profile data indicating capabilities associated with the host, the host profile indexed using host identification data; the device manager configured to provide the host profile data associated with the host; and
e. a registration server (419) operatively connected to the device manager (404) for receiving the host profile data (406), the registration server further operatively connected to the download manager (414) for instructing the download manager to initiate distribution of the software object, and the registration server operatively connected to the device provisioning manager (410) for receiving the host inventory profile (408) associated the host.

28. The system of claim 27 wherein the site profile database comprises equipment identifiers and software version identifiers.

29. The system of claim 27 wherein the software object library (416) is remotely located from the download manager (414) and transmits the software object to the download manager upon request.

30. The system of claim 27 wherein the downloader manager (414) requests the software object from the software object library (416) using data (412) from the site profile database.

31. The system of claim 27 wherein the download manager (414) uses a rule associated with the software object to retrieve and download a second software object.

32. The system of claim 27 further comprising a subscriber service profile (401) indicating a service provided to a subscriber wherein the subscriber service profile is associated with the host (400), the registration server (419) further configured to obtain service profile data from the subscriber service profile.

33. The system of claim 27 further comprising a device provisioning manager (410) capable of generating host-specific command to a host (400) on the cable network (403) prior to downloading the software object to the host.
